# EUROPÄISCHE PATENTSCHRIFT

(11) **EP 2 686 131 B1**
(45) Veröffentlichungstag und Bekanntmachung des Hinweises auf die Patenterteilung: **17.01.2018**
(21) Anmeldenummer: 12704731.4
(22) Anmeldetag: 01.02.2012
(51) Int. Cl.: B23K 26/12

(54) **MASCHINE UND VERFAHREN ZUR MATERIALBEARBEITUNG VON WERKSTÜCKEN MIT EINEM LASERSTRAHL**
MACHINE AND METHOD FOR LASER TREATMENT OF WORK PIECES
MACHINE ET PROCÉDÉ DE TRAITEMENT DE PIÈCES À USINER À L'AIDE D'UN LASER

(30) Priorität: 16.03.2011 DE 102011001322
(43) Veröffentlichungstag der Anmeldung: 22.01.2014
(60) Teilanmeldung: 17198219.2
(73) Patentinhaber: IPG Photonics Corporation, Oxford, Massachusetts 01540 (US)
(72) Erfinder: SIEWERT, Andreas, 44581 Castrop-Rauxel (DE); BARZ, Manfred, 56170 Bendorf (DE); THIEME, Jörg, 90518 Altdorf (DE); FUCHS, Artjom, 57258 Freudenberg (DE); SCHRAMM, Ingo, 57587 Birken-Honigsessen (DE)
(74) Vertreter: Kohlmann, Kai
(86) Internationale Anmeldenummer: PCT/EP2012/051623
(87) Internationale Veröffentlichungsnummer: WO 2012/123167

(56) Entgegenhaltungen:
- EP-A1- 2 149 421
- DE-A1- 4 109 567
- DE-A1- 10 059 246
- DE-A1- 19 817 629
- DE-A1-102006 053 579
- DE-C1- 19 636 458
- JP-A- 10 272 588
- US-B1- 6 518 586

## Beschreibung

Die Erfindung betrifft eine Maschine zur Materialbearbeitung von Werkstücken mit einem Laserstrahl umfassend ein maschinengeführtes Schutzgehäuse mit einer Austrittsöffnung, die den bei der Materialbearbeitung auf mindestens ein Werkstück gerichteten Laserstrahl umgibt. Außerdem betrifft die Erfindung ein Verfahren zur Materialbearbeitung eines Werkstücks mit einem Laserstrahl mit einer derartigen Maschine.

Moderne Hochleistungslaser werden in der industriellen Fertigung zur Materialbearbeitung eingesetzt. Insbesondere gewinnt das Laserstrahlschweißen zunehmend an Bedeutung. Laserstrahlschweißen wird vor allem zum Verschweißen von Werkstücken eingesetzt, die mit hoher Schweißgeschwindigkeit, mit schmaler Schweißnaht und mit geringem thermischem Verzug gefügt werden müssen. Das Laserstrahlschweißen wird in der Regel ohne Zuführung eines Zusatzwerkstoffes ausgeführt. Um die Laserstrahlung flexibel zu dem Werkstück zu führen, weist eine Anordnung zum Laserstrahlschweißen üblicherweise eine Strahlquelle und ein Strahlführungssystem auf. Das Strahlführungssystem umfasst insbesondere einen flexiblen Lichtwellenleiter (LWL), mit dem die Laserstrahlung von der Strahlquelle zu dem Bearbeitungskopf mit einer Austrittsöffnung für den Laserstrahl geführt wird. Der Bearbeitungskopf ist insbesondere an einem mehrachsig beweglichen Arm eines Industrieroboters angeordnet. Die Strahlquelle, beispielsweise ein Festkörperlaser, ist indes vorzugsweise stationär angeordnet.

Von Lasereinrichtungen gehen nicht unerhebliche Gesundheitsgefahren aus. Die konzentrierte elektromagnetische Strahlung kann biologische Schäden bei den Anwendern der Lasereinrichtung hervorrufen. Treffen Laserstrahlen oder deren Streustrahlung auf die Haut bzw. Hornhaut auf, kommt es je nach Wellenlänge der Strahlung zu Verbrennungen und/oder Gewebeschädigungen. Aufgrund dieses Gefährdungspotentials gelten für Lasereinrichtungen strenge Unfallverhütungsvorschriften. Im Sinne dieser Unfallverhütungsvorschriften werden Lasereinrichtungen in unterschiedliche Klassen eingeordnet. Für Maschinen zum Laserstrahlschweißen, die für die Automobilproduktion bestimmt sind, wird das geringste Gefährdungspotential verlangt, wonach die zugängliche Laserstrahlung der Lasereinrichtung ungefährlich sein muss (Klasse 1). Unter einem Schutzgehäuse werden im Sinne dieser Unfallverhütungsvorschriften diejenigen Teile der Lasereinrichtung verstanden, die dafür vorgesehen sind, zugängliche Strahlung zu verhindern, die die vorgeschriebenen Grenzwerte der zugänglichen Strahlung übersteigt.

Um bei Maschinen zum Laserstrahlschweißen eine Gesundheitsgefährdung zu vermeiden, wurde bisher die gesamte Maschine von Schutzwänden, meist aus Metall, eingehaust. Durch diese Einhausung wird den Unfallverhütungsvorschriften Rechnung getragen. Die vollständige Einhausung der Maschine behindert jedoch deren Integration in den kontinuierlichen Produktionsprozess in der Automobilindustrie.

Aus der DE 20 2007 012 255 U1 ist eine vollständige Einhausung einer Maschine zur Materialbearbeitung eines Werkstücks mit einem Laserstrahl bekannt, wobei die Einhausung doppelwandig ausgeführt ist. Eine Sender-Empfänger-Einheit überwacht den Hohlraum zwischen den Wandungen der Einhausung. Sobald in diesen Hohlraum Laserstrahlung eintritt, sprechen die Empfangselemente an und lösen den Sicherheitskreis der Lasereinrichtung aus.

Die DE 10 2006 053 579 A1 offenbart ebenfalls eine vollständig eingehauste Lasermaterialbearbeitungsanlage mit aktiven Laserschutzwänden. Die aktiven Laserschutzwände verhindern nicht nur passiv ein Durchdringen der Laserstrahlung, sondern sie bewirken ein Abschalten der Laserstrahlung unmittelbar nach dem Auftreffen der Laserstrahlung auf die Schutzwand. In Richtung der Laserstrahlung ist der aktiven Schutzwand eine Laserschutzfolie vorgeordnet, die eine beim Auftreffen von Laserstrahlung detektierbare Veränderung bewirkt sowie wenigstens einen Sensor aufweist, der über einen Schwellwertschalter mit dem Laser verbunden ist, um bei Überschreitung des Schwellwertes durch das Detektorsignal den Laser abzuschalten.

Die DE 100 59 246 A1 offenbart ein handgeführtes Lasermaterialbearbeitungsgerät mit einem Schutzgehäuse mit einer Austrittsöffnung, die den bei der Materialbearbeitung auf ein Werkstück gerichteten Laserstrahl umgibt. Der Innenraum des Schutzgehäuses wird durch das Ansetzen des Gerätes an das zu bearbeitende Werkstück lichtdicht verschlossen. Ein lichtempfindlicher Sensor im Innenraum des Schutzgehäuses stellt sicher, dass der Laserstrahl nur so lange vorhanden ist, wie der Innenraum des Schutzgehäuses durch das Werkstück verschlossen ist.

Die DE 198 17 629 A1 offenbart eine handgeführte Laserbearbeitungsvorrichtung zum Fügen von Werkstücken umfassend ein Gehäuse mit einem Handgriff, wobei an dem Gehäuse eine Versorgungsleitung mit einer Lichtfaser angebracht ist. An der Unterseite des handgeführten Gehäuses sind Standfüße und ein Faltenbalg angebracht, der die Fügestelle umgibt. Dieser Faltenbalg schirmt die vom Werkstück ausgehende Streustrahlung von der Umwelt ab. Aufgrund der Druckverhältnisse im Arbeitsraum des Gehäuses wird erreicht, dass der Faltenbalg dicht an der Oberfläche des Werkstücks anliegt. Um den Anforderungen an die Arbeitssicherheit zu genügen, umfasst die Laserbearbeitungsvorrichtung Shuttermittel zur Unterbrechung des Laserstrahls im Inneren des Gehäuses oder Mittel zur Abschaltung der Laserstrahlquelle. Um die Unterbrechung beziehungsweise Abschaltung zu veranlassen, können optische Sensoren vorgesehen sein, die aus dem Arbeitsbereich austretende Laserstrahlung oder Streustrahlung registrieren und bei Registrierung einer zu hohen Intensität der austretenden Strahlung die Unterbrechung des Fügeprozesses veranlassen. Alternativ besteht die Möglichkeit, dass die Laserbearbeitungsvorrichtung Druckmessmittel zur Messung des Drucks im Arbeitsbereich umfasst, wobei diese Druckmessmittel vorzugsweise in Abhängigkeit von der Druckmessung die Shutter- oder Abschaltmittel zur Unterbrechung des Fügeprozesses veranlassen.

Die JP 10 272 588 A offenbart einen Faltenbalg zur Durchleitung eines Laserstrahls. Der Faltenbalg umfasst eine äußere Lage aus synthetischem Leder und eine innere, flammhemmende Lage, auf der brennbaren Leiter in Kompressionsrichtung des Faltenbalgs verlaufend angeordnet sind. Trifft nun der durch den Faltenbalg geleitete Laserstrahl auf die brennbaren Leiter, verbrennen diese. In einem aus den brennbaren Leitern, Spannungsquelle und Stromsensor gebildeten Schaltkreis wird die Änderung des Stromflusses durch die brennbaren Leiter festgestellt, ein Warnsignal erzeugt und die Erzeugung des Laserstrahls unterbrochen.

Die EP 2 149 421 A1 offenbart eine Maschine zum Laserstrahlschweißen in einem kontinuierlichen Produktionsprozess in der Automobilindustrie, bei der eine Strahlquelle über einen Lichtwellenleiter mit einer Fokussieroptik verbunden ist, wobei die Optik in einem maschinengeführten Schutzgehäuse mit einer Austrittsöffnung für den Laserstrahl angeordnet ist. Der bei der Verschweißung auf mindestens ein Werkstück gerichtete Laserstrahl wird von der Fokussieroptik so ausgerichtet, dass der Laserstrahl ausschließlich durch die schlitzförmige Austrittsöffnung hindurch aus dem Schutzgehäuse austritt. Um die Personensicherheit zu verbessern, ist die Strahlquelle erst dann aktivierbar, wenn die Austrittsöffnung des Schutzgehäuses auf einem Werkstück aufsitzt. Diese Maschine zum Laserstrahlschweißen lässt sich in die Infrastruktur herkömmlicher Widerstandsschweißlinien der Automobilindustrie integrieren.

Trotz der in der EP 2 149 421 A1 vorgeschlagenen Maßnahmen zur Verbesserung der Personensicherheit wird die von den Unfallverhütungsvorschriften für Lasereinrichtungen geforderte Klasse 1 nicht unter allen Betriebsbedingungen erreicht. Verschleißt das die Austrittsöffnung aufweisende Druckstück des Schutzgehäuses, kann es zu einem unkontrollierten Austritt von Laserstrahlung im Bereich der Austrittsöffnung kommen. Schließlich kann das Schutzgehäuse durch direkte oder indirekte Laserstrahlung so stark beschädigt werden, dass es zu einem unkontrollierten Austritt von Laserstrahlung aus dem Schutzgehäuse kommt. Derartige Beschädigungen können beispielsweise durch eine defekte Verbindung zwischen dem Lichtwellenleiter und der Fokussieroptik in dem maschinengeführten Schutzgehäuse hervorgerufen werden. Des Weiteren können unkontrollierte Reflexionen von Laserstrahlen das Schutzgehäuse sowohl von innen als auch von außen zerstören.

Ausgehend von diesem Stand der Technik liegt der Erfindung die Aufgabe zu Grunde, eine Maschine zur Materialbearbeitung von Werkstücken der eingangs erwähnten Art, insbesondere eine Maschine zum Laserstrahlschweißen zu schaffen, die ohne vollständige Einhausung der Maschine eine verbesserte Personensicherheit bei Beschädigungen des Schutzgehäuses, insbesondere auch in Folge von Verschleiß, gewährleistet. Des Weiteren soll ein Verfahren und eine Anordnung zur Verbesserung der Personensicherheit beim Betrieb einer derartigen Maschine angegeben werden.

Diese Aufgabe wird bei einer Maschine zur Materialbearbeitung von Werkstücken der eingangs erwähnten Art dadurch gelöst, dass dem Schutzgehäuse mindestens ein Sensor zugeordnet ist, der bestimmte chemische und/oder physikalische Eigenschaften als Messgröße erfasst, der Sensor mit einer Steuerung verbunden ist, die die erfassten Istwerte der Messgröße mit einem Sollwert für die Messgröße vergleicht und abhängig von dem Soll-/Istwert-Vergleich den Laserstrahl unterbricht und/oder dessen Aktivierung unterbindet, mindestens einer der Sensoren ein Widerstandssensor ist, der eine Änderung eines elektrischen Widerstands infolge einer Beschädigung des Schutzgehäuses erfasst und der Widerstandssensor Bestandteil eines ohnehin vorhandenen Sicherheitskreises, der eine Aktivierung der Strahlquelle erst dann ermöglicht, wenn die Austrittsöffnung des Schutzgehäuses auf dem Werkstück aufsitzt.

Außerdem wird die Aufgabe durch ein Verfahren zur Materialbearbeitung eines Werkstücks mit den Merkmalen des Anspruchs 11 und eine Anordnung mit den Merkmalen des Anspruchs 10 gelöst.

Der Widerstandssensor erfasst eine Änderung eines elektrischen Widerstands infolge einer Beschädigung des Schutzgehäuses. Die Austrittsöffnung des Schutzgehäuses ist üblicherweise an einem von dem Schutzgehäuse umfassten, sich in Richtung der Austrittsöffnung verjüngenden Druckstück angeordnet. Beschädigungen des Schutzgehäuses treten in erster Linie im Bereich des hoch belasteten Druckstücks auf, das bei jedem Schweißvorgang gegen das Werkstück gedrückt wird. Der Widerstandssensor ist vorzugsweise an diesem Druckstück angeordnet. Der beispielsweise als in die Wand des Druckstücks eingelassener Draht ausgeführte Widerstandssensor umgibt das Druckstück vorzugsweise mit mindestens einer Windung. Wird nun der insbesondere in einem Abstand von 10 - 15 mm von der Austrittsöffnung angeordnete Draht infolge einer Beschädigung des Druckstücks zerstört, ändert sich der elektrische Widerstand des Widerstandssensors. Die Änderung kann in einem Stromkreis, in den der Widerstandssensor eingebunden ist, erfasst werden. Die Anordnung des Widerstandssensors benachbart zur Austrittsöffnung bewirkt darüber hinaus, dass auch Beschädigungen des Druckstücks in Folge von Verschleiß erfasst werden. Brechen Teile des Druckstücks verschleißbedingt aus, reißt der relativ dünne Draht, wodurch sich der Widerstand ändert. Durch Führung des Drahts entlang des Übergangs vom Druckstück zum restlichen Teil des Schutzgehäuses lässt ich darüber hinaus ein Lösen des gesamten Druckstücks von dem Schutzgehäuse erfassen.

Der Widerstandssensor ist Bestandteil eines ohnehin vorhandenen Sicherheitskreises, der eine Aktivierung der Strahlquelle erst dann ermöglicht, wenn die Austrittsöffnung des Schutzgehäuses auf dem Werkstück aufsitzt. Ein solcher Sicherheitskreis ist in der EP 2 149 421 A1 offenbart, deren Offenbarung in diese Anmeldung ausdrücklich einbezogen wird. Der Sicherheitskreis umfasst beispielsweise ein an dem Schutzgehäuse angeordnetes Schaltelement, das beim Aufsitzen der Austrittsöffnung die Energieversorgung der Stahlquelle einschaltet. Da der Widerstandsensor in diesen Schaltkreis eingeschleift ist, kann bei vorliegender Beschädigung des Druckstücks eine Aktivierung der Energieversorgung unabhängig von der Schaltstellung des Schaltelements nicht erfolgen.

Für eine optimale Integration der Maschine zum Laserstrahlschweißen in die Produktionsumgebung ist eine hohes Maß an Beweglichkeit für das insbesondere an einem Roboterarm angeordnete, maschinengeführte Schutzgehäuse erforderlich. Die Anordnung des Widerstandssensors sowie etwaiger weiterer Sensoren an dem maschinengeführten Schutzgehäuse ermöglicht diese Flexibilität. Eine Anordnung von Sensoren und Überwachung von Messwerten in der Umgebung des sich fortlaufend während des Betriebes mehrachsig bewegenden Schutzgehäuses wäre indes nicht praktikabel.

Bei einem einwandigen Schutzgehäuse ist ein weiterer Sensor, sofern vorhanden, vorzugsweise im Inneren des Schutzgehäuses angeordnet, beispielsweise durch Anbringung an einer Innenfläche des Schutzgehäuses und/oder der Fokussieroptik. Sofern das Schutzgehäuse zur Erhöhung der Sicherheit bereits doppelwandig ausgeführt ist, kann ein weiterer Sensor in dem Hohlraum angeordnet sein, der von den im Abstand zueinander angeordneten Wänden eingeschlossen ist. Sofern an dem Schutzgehäuse zusätzlich zu jedem Widerstandssensor mehrere weitere Sensoren angeordnet sind, können bei einem doppelwandigen Schutzgehäuse mindestens ein Sensor in dem Hohlraum und mindestens ein Sensor im Inneren des Schutzgehäuses angeordnet sein.

Die Sensoren erfassen Ist-Werte einer chemischen oder physikalischen Messgröße im Inneren des Schutzgehäuses oder des Hohlraums zwischen den Wänden des Schutzgehäuses, die sich bei einem Verschleiß im Bereich der Austrittsöffnung für den Laserstrahl und/oder bei einer Beschädigung der Wandungen des Schutzgehäuses verändern. Eine Steuerung vergleicht die erfassten Ist-Werte fortlaufend mit einem Soll-Wert für die Messgröße und unterbricht den Laserstrahl und/oder unterbindet dessen Aktivierung abhängig von dem Soll-/IstWertvergleich. Die Unterbrechung bzw. Unterbindung der Aktivierung kann insbesondere mit Hilfe elektrischer Schaltmittel erfolgen, die die Strahlquelle von der Stromversorgung trennen. Eine andere Möglichkeit besteht darin, dass der Laserstrahl selbst unterbrochen wird. Dies kann beispielsweise mit einem Filterelement oder einer Strahlsperre erfolgen, die unmittelbar hinter der Fokussieroptik in den Strahlengang geschoben wird.

In einem Ausführungsbeispiel der Erfindung ist dem Schutzgehäuse der Maschine zur Materialbearbeitung zusätzlich zu dem Widerstandssensor mindestens ein Sensor für elektromagnetische Strahlung zugeordnet. Der Sensor ist im Inneren des Schutzgehäuses und/oder in dem Hohlraum der Doppelwandung angeordnet. Fällt in das Schutzgehäuse aufgrund einer Beschädigung der Wandung Umgebungslicht ein, ändert sich der Pegel des Sensors. Die Pegeländerung wird von der Steuerung erfasst, die abhängig von der Pegeländerung den Laserstrahl unterbricht oder, sofern dieser noch nicht aktiviert war, dessen Aktivierung unterbindet. Ist das die Austrittsöffnung umfassende Druckstück des Schutzgehäuses verschlissen, kann es aufgrund des nicht mehr bündig auf dem zu verschweißenden Werkstück aufsitzenden Druckstücks ebenfalls zum Einfall von Umgebungslicht in das Innere des Schutzgehäuses kommen, der von dem Sensor erfasst wird.

Der Empfindlichkeitsbereich des Sensors für elektromagnetische Strahlung ist auf die in der Umgebung der Maschine zur Materialbearbeitung herrschende elektromagnetische Strahlung abgestimmt. Vorzugsweise ist der Sensor für elektromagnetische Strahlung unempfindlich für die elektromagnetische Strahlung im Wellenlängenbereich des Laserstrahls. Diese Unempfindlichkeit kann insbesondere durch einen Filter erzielt werden, der dem Sensor für elektromagnetische Strahlung vorgeschaltet ist und elektromagnetische Strahlung im Wellenlängenbereich des Laserstrahls nicht transmittieren lässt.

Als Sensoren für elektromagnetische Strahlung kommen insbesondere Fotowiderstände oder Fotodioden in Betracht.

Alternativ oder zusätzlich können Beschädigungen des Schutzgehäuses mit einem Durchflusssensor festgestellt werden, sofern das Schutzgehäuse einen Einlass aufweist, über den dem Inneren des Schutzgehäuse ein gasförmiges Medium mit einem bestimmten ersten Volumenstrom zuführbar ist und das Schutzgehäuse einen Auslass aufweist, durch den das gasförmige Medium mit einem bestimmten zweiten Volumenstrom abführbar ist. Maschinen zum Laserstrahlschweißen weisen eine derartige Gasströmung üblicherweise in Form eines Cross-Jets oder Plasma-Jets auf, um eine Beeinträchtigung des Laserstrahls durch Verschmutzungen und Partikel im Inneren des Schutzgehäuses zu verhindern. Der Auslass ist üblicherweise mit einer Absaugvorrichtung verbunden, die das zugeführte gasförmige Medium mit einem definierten Volumenstrom absaugt. Kommt es in Folge einer Beschädigung des Schutzgehäuses zu einer Leckage, entweicht ein Teil des gasförmigen Mediums über die Leckage. Hierdurch wird der abgeführte Volumenstrom des gasförmigen Mediums kleiner. Diese Volumenstromänderung wird von dem dem Inneren des Schutzgehäuses zugeordneten Durchflusssensor erfasst. Der Durchflusssensor ist insbesondere im Bereich des Auslasses für das gasförmige Medium angeordnet. Er kann jedoch auch in einem sich an den Auslass anschließenden, mit der Absaugvorrichtung verbundenem Rohr angeordnet sein. Zusätzlich kann auch der Einlass für das gasförmige Medium ständig von einem Durchflusssensor überwacht werden, um etwaige Volumenstromschwankungen des zugeführten gasförmigen Mediums in der Steuerung für die Unterbrechung bzw. Unterbindung des Laserstrahls zu berücksichtigen.

Um den Volumenstrom am Aus- bzw. Einlass zu erfassen, kann der Durchflusssensor die Fließgeschwindigkeit des gasförmigen Mediums messen und der Durchfluss aus dem Produkt der durchströmten Querschnittsfläche und der dort gemessenen Fließgeschwindigkeit ermittelt werden. Die Fließgeschwindigkeit des gasförmigen Mediums kann beispielsweise mit einem Flügelradanemometer erfasst werden. Zur Messung der Fließgeschwindigkeit kommen darüber hinaus magnetisch induktive Durchflusssensoren sowie insbesondere Ultraschall-Durchflusssensoren in Betracht. Ein wesentlicher Vorteil des Ultraschall-Durchflusssensors besteht darin, dass die Messung weitgehend unabhängig von den Eigenschaften der gasförmigen Medien ist. Des Weiteren weist ein Ultraschall-Durchflusssensor keine bewegten mechanischen Teile auf, so dass der Wartungsaufwand gering ist, was insbesondere für den Einsatz in automatisierten Produktionsprozessen der Automobilindustrie von Vorteil ist.

In einer weiteren Ausgestaltung der Erfindung ist an dem Schutzgehäuse zusätzlich zu dem Widerstandssensor mindestens ein Drucksensor angeordnet, der eine Änderung des im Inneren des Schutzgehäuses und/oder in dem Hohlraum herrschenden Drucks erfasst.

In einer bestimmten Betriebssituation des maschinengeführten Schutzgehäuses, beispielsweise wenn dieses mit der Austrittsöffnung bündig auf dem zu verschweißenden Werkstück aufsitzt, herrscht ein definierter Druck im Inneren des Schutzgehäuses. Ändert sich dieser durch eine Beschädigung in der Wandung des Schutzgehäuses oder durch einen Verschleiß des die Austrittsöffnung aufweisenden Druckstücks des Schutzgehäuses, wird diese Änderung des Drucks von der Steuerung erkannt und der Laserstrahl unterbrochen.

Sofern eine Änderung des Drucks in dem Hohlraum des doppelwandigen Schutzgehäuses überwacht wird, können zuverlässig Beschädigungen der Wandung des Schutzgehäuses festgestellt werden. Ein Verschleiß des Schutzgehäuses im Bereich der Austrittsöffnung, insbesondere an einem die Austrittsöffnung aufweisenden Druckstück kann durch eine Drucküberwachung des Hohlraums indes nicht festgestellt werden. Aus diesem Grund empfiehlt es sich, sowohl den Druck im Inneren des Schutzgehäuses als auch dem Hohlraum der ggf. vorhandenen Doppelwand zu erfassen.

Zur Erfassung des Drucks kommen beispielsweise piezoelektrische und insbesondere piezoresistive Drucksensoren in Betracht. Piezoresistive Drucksensoren weisen die für den Anwendungsfall geforderte hohe Empfindlichkeit auf und sind darüber hinaus kostengünstig verfügbar. Die Temperaturabhängigkeit piezoresistiver Drucksensoren kann durch eine differenz-bildende elektrische Schaltung unwirksam gemacht werden.

In einer weiteren Ausgestaltung der Erfindung ist an dem Schutzgehäuse zusätzlich zu dem Widerstandssensor mindestens ein Sensor zur Erfassung eines Schallpegels angeordnet, der eine Änderung des Schallpegels im Inneren des Schutzgehäuses erfasst. Der Einsatz eines Schallpegelsensors bietet den zusätzlichen Vorteil, dass mit Defekten beweglicher Teile, beispielsweise der Fokussieroptik, einhergehende Nebengeräusche frühzeitig erkannt werden können.

Zur Erfassung des Schallpegels kommen insbesondere Mikrofone zum Einsatz. Das Mikrofon wandelt den Schalldruck im Inneren des Schutzgehäuses in eine entsprechende analoge elektrische Spannung. Die Spannung wird in der Steuerung ausgewertet und unterbricht den Laserstrahl bzw. unterbindet dessen Aktivierung.

In einer weiteren Ausgestaltung der Erfindung ist an dem Schutzgehäuse zusätzlich zu dem Widerstandssensor mindestens ein chemischer Sensor angeordnet, der eine Änderung der chemischen Zusammensetzung des Gases im Inneren des Schutzgehäuses und/oder dem Hohlraum erfasst. Wird die Wandung des Schutzgehäuses beschädigt, gelangt während des Betriebs Fremdluft in das Innere des Schutzgehäuses und /oder den Hohlraum. Hierdurch ändert sich die chemische Zusammensetzung des Gases, die von dem chemischen Sensor erfasst wird. Die Steuerung unterbindet abhängig von der Änderung der chemischen Zusammensetzung des Gases den Laserstrahl bzw. unterbindet dessen Aktivierung.

Der chemische Sensor ist ein Gassensor, der die Informationen über das ihn umgebende Gas in ein elektrisch nutzbares Signal umwandelt, das von der Steuerung verarbeitet werden kann. Als Gassensoren kommen Sensoren in Betracht, die nach chemoresistiven Prinzipen arbeiten. Das Umgebungsgas beeinflusst unmittelbar die Leitfähigkeit einer gasempfindlichen Sensorschicht. Die Widerstandsänderung dient als Messgröße. Als gasempfindliche Schichten kommen beispielsweise anorganische Metalloxid-Halbleiter (Mox) oder ein leitfähiges Polymer in Betracht. Alternativ kann der Gassensor nach kapazitiven Prinzipien arbeiten. Ein gasempfindliches Dielektrikum verändert dabei die Kapazität eines Kondensators. Die Kapazitätsänderung dient dann als Messgröße.

In Folge der erfindungsgemäßen Maßnahmen lässt sich das Schutzgehäuse an einem Roboterarm eines Roboters befestigen und in gleicher Weise wie ein Schweißkopf einer herkömmlichen Widerstandsschweißzange zu dem Werkstück bewegen, ohne dass von der Maschine zum Laserschweißen eine Gesundheitsgefährdung für Personen in der Umgebung der Maschine ausgeht.

Eine vorteilhafte Anordnung zur Erhöhung der Personensicherheit, insbesondere beim Laserstrahlschweißen, umfasst eine Strahlquelle für Laserstrahlung sowie ein Strahlführungssystem, das die Laserstrahlung von der Strahlquelle zu einer Fokussieroptik in dem Schutzgehäuse einer Maschine zur Materialbearbeitung nach einem oder mehreren der Ansprüche 1 bis 10 führt.

Die Strahlquelle ist vorzugsweise ein Faserlaser. Faserlaser verfügen über einen hohen elektrisch-optischen Wirkungsgrad, eine herausragende Strahlqualität, eine hohe Lebensdauer und einen kompakten, wartungsfreien und unempfindlichen Aufbau, weshalb sie für den vorgesehen Anwendungsfall besonders geeignet sind.

Der mindestens eine dotierte Kern einer Glasfaser bildet das aktive Medium. Faserlaser werden im Allgemeinen optisch gepumpt, in dem parallel zum Faserkern in dessen Mantel oder in diesen selbst Strahlung eingekoppelt wird. Die Pumpstrahlung stammt vorzugsweise von einer Pumpanordnung, die mehrer Singlemode-Faserlaser umfasst. Als Dotierungselement für jeden laseraktiven Faserkern kommen Ytterbium und Neodym für die geforderte Hochleistungsanwendung zum Einsatz.

Nach Austritt aus dem dotierten Kern gelangt der Laserstrahl in das Strahlführungssystem, insbesondere einen eine Glasfaser enthaltenden Lichtwellenleiter, welcher die Strahlung zu der Fokussieroptik der Materialbearbeitungsmaschine leitet.

Nachfolgend wird die Erfindung anhand der Abbildungen näher erläutert. Es zeigen:
- **Figur 1**: eine Maschine zum Laserschweißen in einer Schutzumhausung nach dem Stand der Technik
- **Figur 2a**: eine erstes Ausführungsbeispiel einer erfindungsgemäßen Maschine zum Laserschweißen mit einem Sensor für elektromagnetische Strahlung bei ordnungsgemäßem Betrieb
- **Figur 2b**: die Maschine nach Figur 2a bei gestörtem Betrieb
- **Figur 3a**: eine zweites Ausführungsbeispiel einer erfindungsgemäßen Maschine zum Laserschweißen mit einem Durchflusssensor bei ordnungsgemäßem Betrieb
- **Figur 3b**: die Maschine nach Figur 3a mit einem Durchflusssensor bei gestörtem Betrieb
- **Figur 4a**: eine drittes Ausführungsbeispiel einer erfindungsgemäßen Maschine zum Laserschweißen mit einem Drucksensor bei ordnungsgemäßem Betrieb
- **Figur 4b**: die Maschine nach Figur 4a mit einem Drucksensor bei gestörtem Betrieb
- **Figur 5**: eine Darstellung eines Schutzgehäuses einer erfindungsgemäßen Maschine zum Laserschweißen mit doppelwandigem Schutzgehäuse
- **Figur 6**: ein Schutzgehäuse der erfindungsgemäßen Maschine zum Laserschweißen mit einem Widerstandssensor.

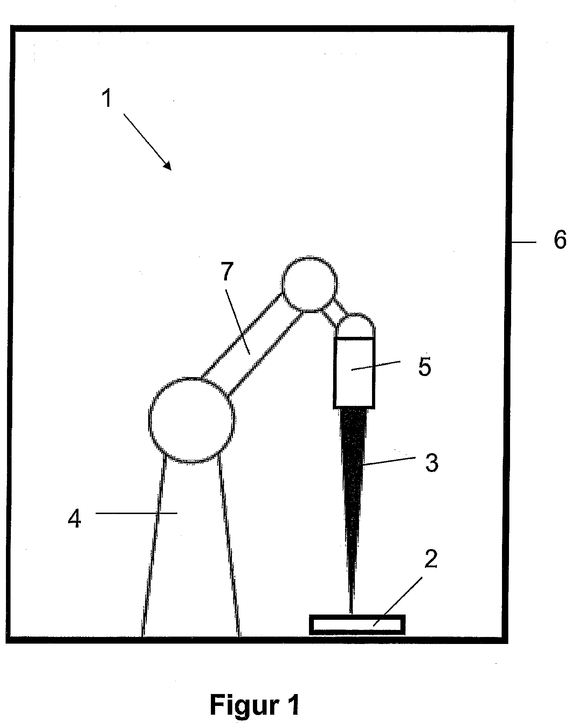

Figur 1 zeigt den prinzipiellen Aufbau einer Maschine (1) zur Materialbearbeitung eines Werkstücks (2) mit einem Laserstrahl (3) eines Hochleistungslasers. Ein Roboter (4) mit einem Roboterarm (7) erlaubt dem Anwender eine flexible Führung der Laserstrahlung zum Werkstück (2). Die Laserenergie wird mit einem nicht dargestellten Lichtwellenleiter zu einem Bearbeitungskopf (5) geführt, aus dem der Laserstrahl (3) austritt. Um die erforderliche Lasersicherheit herzustellen, ist die gesamte Laserbearbeitungsmaschine in einer Schutzumhausung (6) angeordnet, die einen Austritt der Laserstrahlung aus der Schutzumhausung verhindert.

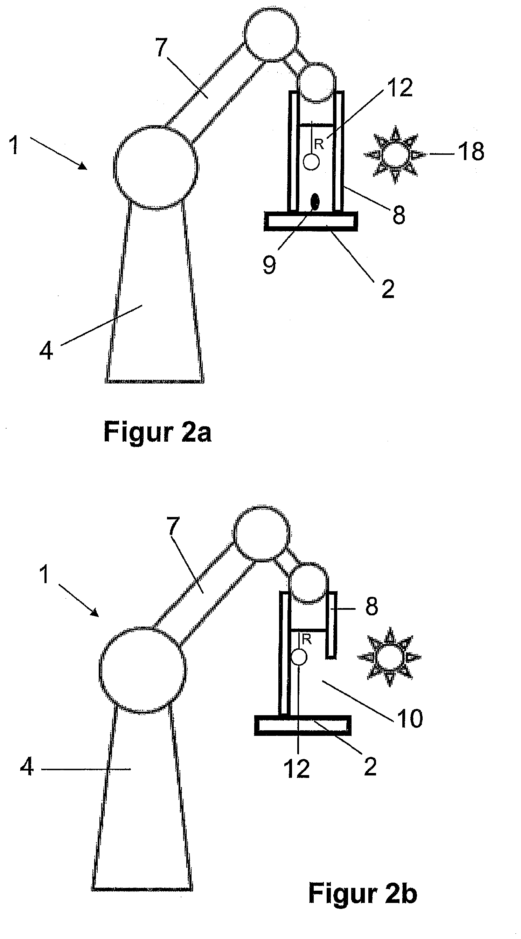

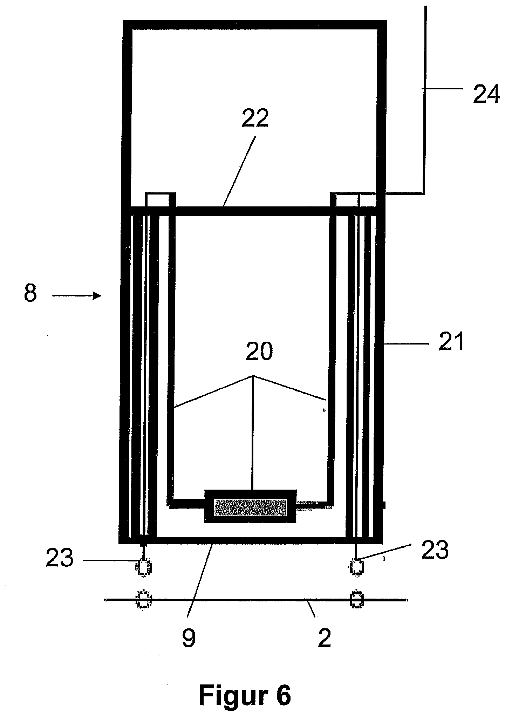

Die in Figuren 2 - 4 dargestellte erfindungsgemäße Maschine (1) zum Laserschweißen umfasst einen Roboter (4) mit einem Roboterarm (7), an dessen Ende ein von dem Roboter (4) geführtes Schutzgehäuse (8) angeordnet ist. Das Schutzgehäuse weist an der dem Anschlagspunkt des Roboterarms (7) gegenüberliegenden Stirnseite eine Austrittsöffnung (9) auf, die den bei der Materialbearbeitung auf das Werkstück (2) gerichteten Laserstrahl (3) umgibt. Sofern die Maschine (1) zum Laserschweißen in der Automobilindustrie verwendet wird, ist die Austrittsöffnung (9) des Schutzgehäuses (8) an einem von dem Schutzgehäuse (8) umfassten, sich in Richtung der Austrittsöffnung (9) erstreckenden Druckstück (21) angeordnet(vgl. Figur 6). Gegenüber dem übrigen Schutzgehäuse (8) verjüngt sich das Druckstücks (21), das mit der Austrittsöffnung (9) beim Schweißen bündig auf dem Werkstück (2) aufsitzt.

Die Austrittsöffnung weist insbesondere die Form eines Schlitzes auf. Der Laser ist erst dann aktivierbar, wenn die Austrittsöffnung (9) auf dem Werkstück aufsitzt. Hierzu kann an dem Schutzgehäuse (8) ein Schaltelement angeordnet sein, das beim Aufsitzen des Austrittsschlitzes auf einem der Werkstücke die Energieversorgung der Strahlquelle einschaltet. Insoweit wird auf die EP 2 149 421 A1 hingewiesen, deren Offenbarung ausdrücklich in diese Anmeldung einbezogen wird. Die Figuren 2a, 3a und 4a zeigen jeweils die erfindungsgemäße Maschine (1) mit auf dem Werkstück (2) aufsitzenden intakten Schutzgehäuse (8). Die Figuren 2b, 3b und 4b zeigen das Schutzgehäuse (8) mit einer schematisch dargestellten Beschädigung (10) im Bereich einer Seitenwand des Schutzgehäuses (8).

Figur 6 zeigt lediglich das Schutzgehäuse (8) der Maschine (1) zum Laserschweißen mit einem daran angeordneten Widerstandssensor (20), der eine Änderung eines elektrischen Widerstands infolge einer Beschädigung des Schutzgehäuses (8) erfasst. In den Ausführungsbeispielen nach den Figuren 2 bis 4 ist der Widerstandssensor (20) der Übersichtlichkeit halber nicht dargestellt.

Der als in die Wand des Druckstücks (21) eingelassener Draht ausgeführte Widerstandssensor (20) umgibt das Druckstück (21) vorzugsweise mit mindestens einer Windung. Hierzu kann der Draht in einer umlaufenden Nut in der Gehäusewand eingeklebt sein. Der Abstand der Drahtwindung zu der Austrittsöffnung (9) beträgt etwa 10 - 15 mm. Der Draht kann auch im Inneren des Druckstücks an dessen Wand befestigt sein. Der Draht des Widerstandssensors (20) wird von der Windung entlang des Übergangs (22) vom Druckstück (21) zum restlichen Teil des Schutzgehäuses (8) geführt.

Der Widerstandssensor (20) ist Bestandteil eines ohnehin vorhandenen Sicherheitskreis (24), der eine Aktivierung der Strahlquelle erst dann ermöglicht, wenn die Austrittsöffnung (9) des Schutzgehäuses auf dem Werkstück (2) aufsitzt. Der Sicherheitskreis (24) umfasst zwei an dem Schutzgehäuse (8) angeordnete Schaltelemente (23), beispielsweise Tastschalter, die beim Aufsitzen der Austrittsöffnung (9) die Energieversorgung der Strahlungsquelle einschalten. Der Widerstandsensor (20) ist in den Schaltstromkreis der Tastschalter eingeschleift, so dass bei einer vorliegenden Beschädigung des Druckstücks (21) und einer damit einhergehende Beschädigung des Drahtes des Widerstandsensors (20) eine Aktivierung der Energieversorgung unabhängig von der Schaltstellung der Schaltelemente (23) nicht erfolgen kann.

Unterschiede zwischen den Ausführungsformen der erfindungsgemäßen Maschine (1) nach den Figuren 2 bis 4 ergeben sich hinsichtlich der dem Schutzgehäuse (8) zugeordneten Sensoren, die bestimmte chemische und/oder physikalische Eigenschaften als Messgröße erfassen. Die von den Sensoren erfassten Ist-Werte der Messgrößen werden in einer in den Figuren nicht dargestellten Steuerung mit entsprechenden Soll-Werten für die Messgröße verglichen. Abhängig von dem Soll-/Ist-Wert-Vergleich unterbricht die Steuerung mit einem Stellglied den Laserstrahl bzw. unterbindet dessen Aktivierung.

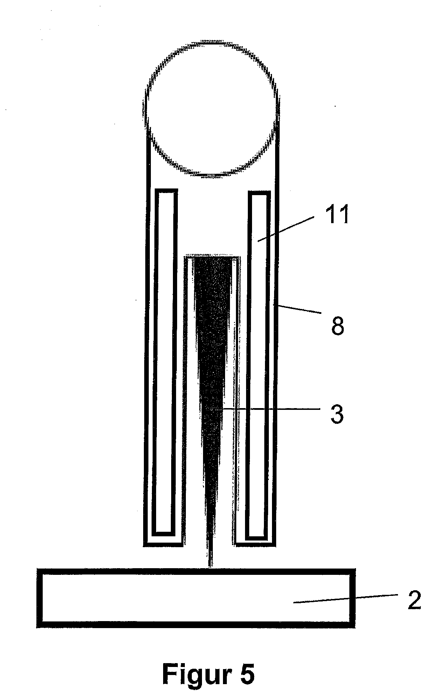

In den dargestellten Ausführungsbeispielen nach den Figuren 2 - 4 wird das Schutzgehäuse (8) von einer einfachen Wand gebildet. Zur Erhöhung der Sicherheit kann das Schutzgehäuse (8) jedoch auch, wie in Figur 5 dargestellt, doppelwandig ausgeführt sein. Die im Abstand zueinander angeordneten Wände des Schutzgehäuses (8) schließen einen Hohlraum (11) ein.

Sämtliche nachfolgend beschriebenen Ausführungsbeispiele nach den Figuren 2 - 4 können sowohl mit einwandigem als auch doppelwandigem Schutzgehäuse (8) ausgeführt sein. Jede Maschine (1) kann zusätzlich zu dem Widerstandssensor (20) ausschließlich den in der jeweiligen Figur dargestellten Sensor oder eine Kombination der in den Figuren 2 - 4 dargestellten bzw. zuvor beschriebenen Sensoren aufweisen. Die Sensoren können sowohl im Inneren des Schutzgehäuses (8) als auch, sofern vorhanden, in dem Hohlraum (11) des Schutzgehäuses (8) angeordnet werden.

In dem Ausführungsbeispiel nach Figur 2 ist im Inneren des Schutzgehäuses (8) ein Sensor für elektromagnetische Strahlung (12) angeordnet. Dem Sensor (12) kann ein Filter vorgeordnet sein, der für die Laserstrahlung (3) undurchlässig ist. Dies bewirkt, dass der Sensor für die elektromagnetische Strahlung (12) ausschließlich auf die übrige, in das Schutzgehäuse (8) gelangende Strahlung reagiert. Dies kann elektromagnetische Strahlung in der Umgebung des Schutzgehäuses sein, die beim Abheben des Schutzgehäuses von dem Werkstück (2) über die Austrittsöffnung (9) in das Innere des Schutzgehäuses (8) gelangt oder elektromagnetische Strahlung, die bei auf dem Werkstück (2) aufsitzendem Laserschutzgehäuse durch eine etwaige Beschädigung (10) in das Schutzgehäuse (8) dringt. Um im Arbeitsbereich außerhalb des Schutzgehäuses eine definierte elektromagnetische Strahlung zu gewährleisten, können eine oder mehrere Strahlungsquellen (18) im Arbeitsbereich des maschinengeführten Schutzgehäuses (8) angeordnet sein. Die Wellenlänge der elektromagnetischen Strahlung der Strahlungsquellen (18) ist vorzugsweise auf den Sensor für die elektromagnetische Strahlung (12) abgestimmt.

Der Sensor für die elektromagnetische Strahlung (12) erfasst von Außen in das Innere des Schutzgehäuses (8) eingestrahlte elektromagnetische Strahlung. Erkennt die Steuerung eine außerhalb des Toleranzbereichs liegende Abweichung der erfassten Ist-Werte von dem Soll-Wert für die elektromagnetische Strahlung, aufgrund einer Beschädigung (10) in der Wandung des Schutzgehäuses, kommt es zur Unterbrechung des Laserstrahls (3).

Sobald bei ordnungsgemäßem Betrieb das Schutzgehäuse (8) von dem Werkstück (3) abgehoben wird, fällt ebenfalls elektromagnetische Strahlung über die Eintrittsöffnung (9) in das Gehäuse ein und wird dort von dem Sensor (12) erfasst. Die einfallende Strahlung unterbindet eine Aktivierung des Laserstrahls, solange dessen Austrittsöffnung noch nicht auf dem Werkstück (2) aufsitzt.

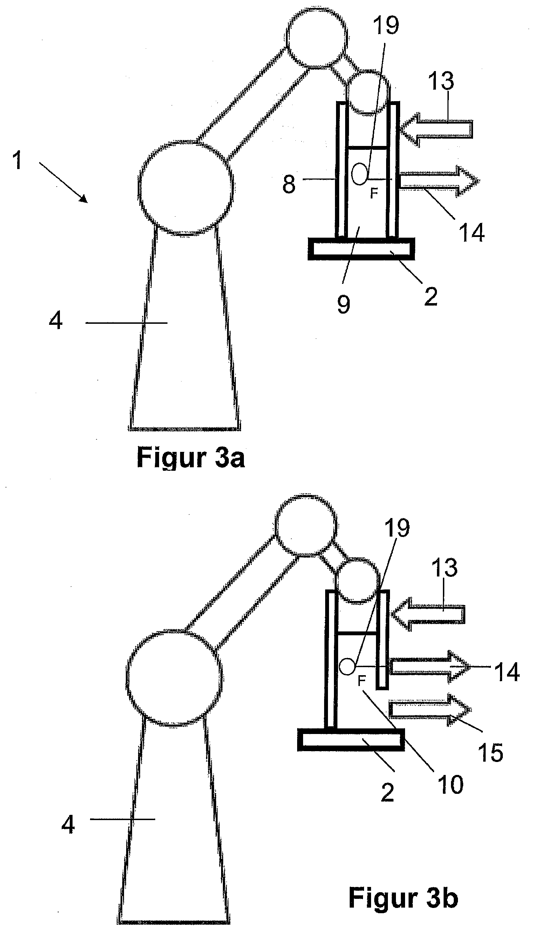

An dem Schutzgehäuse (8) nach Figur 3 ist ein Durchflusssensor (19) angeordnet. Der Durchflusssensor (19) erfasst eine Volumenstromänderung zwischen einem zugeführten gasförmigen Medium (13) und dem zwangsweise abgeführten gasförmigen Medium (14). Das gasförmige Medium (13, 14) wird dem Schutzgehäuse (8) über einen nicht dargestellten Einlass zugeführt und über einen nicht dargestellten Auslass (14) abgeführt. Ändert sich der Volumenstrom, beispielsweise durch eine Beschädigung (10) in der Wandung des Schutzgehäuses (8), erfasst der Durchflusssensor (19) eine Änderung des Volumenstroms des gasförmigen Mediums. Aufgrund der Beschädigung (10) tritt ein Lecklagevolumenstrom (15) des gasförmigen Mediums aus dem Schutzgehäuse (8) heraus, so dass der Durchflusssensor (19) am Auslass einen geringeren Volumenstrom des abgeführten gasförmigen Mediums (14) erfasst. Diese Abweichung des von dem Durchflusssensor (19) gemessenen Ist-Wertes wird in der Steuerung ausgewertet und abhängig von dem Soll-/Ist-Wert-Vergleich der Laserstrahl unterbrochen.

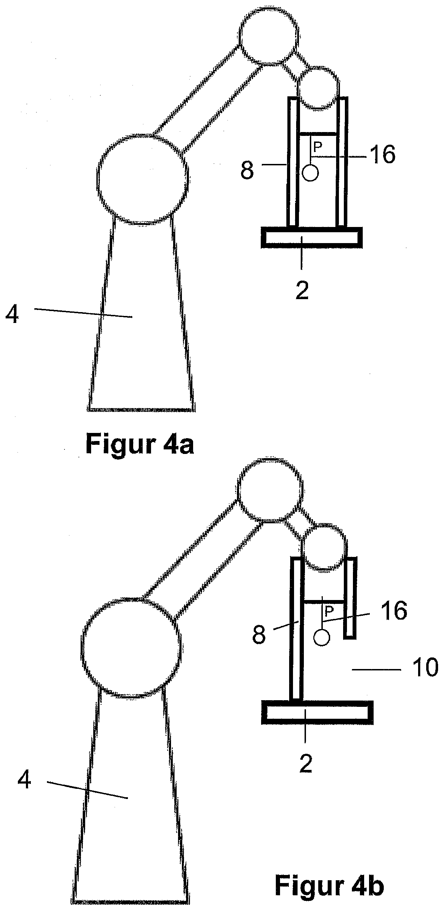

Figur 4 zeigt ein Ausführungsbeispiel der Maschine (1) zum Laserschweißen, bei dem an dem Schutzgehäuse (8) ein Drucksensor (16) angeordnet ist, der eine Änderung des im Inneren des Schutzgehäuses (8) herrschenden Drucks erfasst. Tritt eine Beschädigung (10) in der Wandung des Schutzgehäuses (8) auf, ändert sich der Druck und die Steuerung unterbricht den Laserstrahl (3).

Der wesentliche Vorteil der beschriebenen Messanordnungen und Messverfahren besteht darin, dass gegenüber der in Figur 1 dargestellten Vollumhausung (6) erheblich geringere Kosten anfallen. Des Weiteren lässt sich die Maschine (1) zur Materialbearbeitung, insbesondere zum Laserschweißen besser in kontinuierliche Produktionsprozesse einbinden.

**Bezugszeichenliste**

| **Nr.** | **Bezeichnung** |
|---|---|
| 1 | Maschine |
| 2 | Werkstück |
| 3 | Laserstrahl |
| 4 | Roboter |
| 5 | Bearbeitungskopf |
| 6 | Schutzumhausung |
| 7 | Roboterarm |
| 8 | Schutzgehäuse |
| 9 | Austrittsöffnung |
| 10 | Beschädigung |
| 11 | Hohlraum |
| 12 | Sensor elektromagnetische Strahlung |
| 13 | zugeführtes gasförmiges Medium |
| 14 | abgeführtes gasförmiges Medium |
| 15 | Leckagevolumenstrom |
| 16 | Drucksensor |
| 17 | Sensor zur Erfassung des Schallpegels |
| 18 | Strahlungsquelle |
| 19 | Durchflusssensor |
| 20 | Widerstands sensor |
| 21 | Druckstück |
| 22 | Übergang |
| 23 | Schaltelement |
| 24 | Sicherheitskreis |

## Patentansprüche

1. Maschine zur Materialbearbeitung mit einem Laserstrahl umfassend ein maschinengeführtes Schutzgehäuse mit einer Austrittsöffnung, die den bei der Materialbearbeitung auf ein Werkstück gerichteten Laserstrahl umgibt, wobei
- an dem Schutzgehäuse (8) mindestens ein Sensor (12, 16, 19, 20) angeordnet ist, der bestimmte physikalische Eigenschaften als Messgröße erfasst, und
- der Sensor (12, 16, 19, 20) mit einer Steuerung verbunden ist, die die erfassten Istwerte der Messgröße mit einem Sollwert für die Messgröße vergleicht und abhängig von dem Soll-/IstwertVergleich den Laserstrahl (3) unterbricht und/oder dessen Aktivierung unterbindet, **dadurch gekennzeichnet, dass**
- mindestens einer der Sensoren (12, 16, 19, 20) ein Widerstandssensor (20) ist, der eine Änderung eines elektrischen Widerstands infolge einer Beschädigung des Schutzgehäuses (8) erfasst und
- der Widerstandssensor (20) Bestandteil eines Sicherheitskreises (24) ist, der eine Aktivierung der Strahlquelle erst dann ermöglicht, wenn die Austrittsöffnung (9) des Schutzgehäuses (8) auf dem Werkstück (2) aufsitzt.

2. Maschine zur Materialbearbeitung nach Anspruch 1, **dadurch gekennzeichnet, dass** die Austrittsöffnung (9) des Schutzgehäuses (8) an einem von dem Schutzgehäuse (8) umfassten Druckstück (21) angeordnet ist und der Widerstandssensor (20) an dem Druckstück (21) angeordnet ist.

3. Maschine zur Materialbearbeitung nach Anspruch 1 oder 2, **dadurch gekennzeichnet, dass** mindestens ein weiterer Sensor (12, 16, 19) im Inneren des Schutzgehäuses (8) angeordnet ist, der bestimmte chemische oder physikalische Eigenschaften im Hohlraum (11) als Messgröße erfasst.

4. Maschine zur Materialbearbeitung nach einem der Ansprüche 1 bis 3, **dadurch gekennzeichnet, dass** das Schutzgehäuse (8) doppelwandig ausgeführt ist, wobei die im Abstand zueinander angeordneten Wände des Schutzgehäuses (8) mindestens einen Hohlraum (11) einschließen und mindestens ein weiterer Sensor (12, 16, 19) in dem Hohlraum (11) angeordnet ist, der bestimmte chemische oder physikalische Eigenschaften im Hohlraum (11) als Messgröße erfasst.

5. Maschine zur Materialbearbeitung nach Anspruch 3 oder 4, **dadurch gekennzeichnet, dass** der Sensor (12) ein Sensor für elektromagnetische Strahlung ist, der von außen in das Innere des Schutzgehäuses (8) und /oder den Hohlraum (11) einfallende elektromagnetische Strahlung (R) erfasst.

6. Maschine zur Materialbearbeitung nach Anspruch 3 oder 4, **dadurch gekennzeichnet, dass** der Sensor ein Drucksensor (16) ist, der eine Änderung des im Inneren des Schutzgehäuses (8) und/oder in dem Hohlraum (11) herrschenden Drucks erfasst.

7. Maschine zur Materialbearbeitung nach Anspruch 3, **dadurch gekennzeichnet, dass** der Sensor ein Sensor zur Erfassung eines Schallpegels ist, der eine Änderung des Schallpegels im Inneren des Schutzgehäuses (8) erfasst.

8. Maschine zur Materialbearbeitung nach Anspruch 3 oder 4, **dadurch gekennzeichnet, dass** der Sensor ein chemischer Sensor ist, der eine Änderung der chemischen Zusammensetzung des Gases im Inneren des Schutzgehäuses und/oder dem Hohlraum erfasst.

9. Maschine zur Materialbearbeitung nach einem der Ansprüche 1 bis 8, **dadurch gekennzeichnet, dass**
- das Schutzgehäuse (8) einen Einlass aufweist, über den dem Inneren des Schutzgehäuses (8) ein gasförmiges Medium (13) zuführbar ist,
- das Schutzgehäuse (8) einen Auslass aufweist, durch den das gasförmige Medium (14) abführbar ist und
- mindestens ein Durchflusssensor (19) zur Erfassung einer Änderung des Volumenstroms (F) des zu- und /oder abgeführten gasförmigen Mediums (13, 14) an dem Schutzgehäuse angeordnet ist.

10. Anordnung umfassend eine Strahlquelle für Laserstrahlung sowie ein Strahlführungssystem, das die Laserstrahlung von der Strahlquelle zu einer Fokussieroptik in einem Schutzgehäuse einer Maschine zur Materialbearbeitung nach einem oder mehreren der Ansprüche 1 bis 9 führt.

11. Verfahren zur Materialbearbeitung von Werkstücken mit einem Laserstrahl, bei dem ein maschinengeführtes Schutzgehäuse mit einer Austrittsöffnung, die den bei der Materialbearbeitung auf ein Werkstück gerichteten Laserstrahl umgibt, auf dem Werkstück aufgesetzt wird, **dadurch gekennzeichnet, dass**
- mittels mindestens einem an dem Schutzgehäuse angeordneten Widerstandsensor ein Änderung eines elektrischen Widerstands infolge einer Beschädigung des Schutzgehäuses erfasst wird, wobei der Widerstandssensor (20) Bestandteil eines Sicherheitskreises (24) ist,
- die erfassten Istwerte des elektrischen Widerstands mit einem Sollwert für den elektrischen Widerstand verglichen werden und
- abhängig von dem Soll-/Istwert-Vergleich der Laserstrahl unterbrochen und/oder dessen Aktivierung unterbunden wird, wobei der Sicherheitskreis (24) eine Aktivierung der Strahlquelle erst dann ermöglicht, wenn die Austrittsöffnung (9) des Schutzgehäuses (8) auf dem Werkstück (2) aufsitzt.

12. Verfahren zur Materialbearbeitung nach Anspruch 11, **dadurch gekennzeichnet, dass**
- mittels mindestens einem weiteren an dem Schutzgehäuse angeordneten Sensor bestimmte chemische und/oder physikalische Eigenschaften als Messgröße erfasst werden,
- die erfassten Istwerte der Messgröße mit einem Sollwert für die Messgröße verglichen werden und
- abhängig von dem Soll-/Istwert-Vergleich der Laserstrahl unterbrochen und/oder dessen Aktivierung unterbunden wird.

13. Verfahren zur Materialbearbeitung nach Anspruch 12 , **dadurch gekennzeichnet, dass** die Istwerte der Messgrößen im Inneren des Schutzgehäuses erfasst werden.

14. Verfahren nach Anspruch 12 oder 13, **dadurch gekennzeichnet, dass** die Istwerte der Messgrößen in einem Hohlraum erfasst werden, der von im Abstand zueinander angeordneten Wänden des Schutzgehäuses eingeschlossen wird.

15. Verfahren nach einem der Ansprüche 11 - 14**, dadurch gekennzeichnet, dass** das Schutzgehäuse mit Hilfe eines Roboters bewegt wird.

## Claims

1. Machine for material processing with a laser beam comprising a machine-guided protective housing with an outlet opening which surrounds the laser beam directed onto a workpiece during the material processing, wherein
- at least one sensor (12, 16, 19, 20) which detects certain physical properties as measured quantities is arranged on the protective housing (8) and
- the sensor (12, 16, 19, 20) is connected to a controller which compares the detected actual values of the measured quantity with a desired value for the measured quantity and, depending on the desired/actual value comparison, interrupts the laser beam (3) and/or prevents activation thereof,
**characterized in that**
- at least one of the sensors (12, 16, 19, 20) is a resistance sensor (20) which detects a change in an electrical resistance as a result of damage to the protective housing (8) and
- the resistance sensor (20) is part of a safety circuit (24) which only allows activation of the beam source when the outlet opening (9) of the protective housing (8) sits on the workpiece (2).

2. The machine for material processing according to claim 1, **characterized in that** the outlet opening (9) of the protective housing (8) is arranged on a pressure piece (21) comprised by the protective housing (8) and the resistance sensor (20) is arranged on the pressure piece (21).

3. The machine for material processing according to claims 1 or 2, **characterized in that** at least one additional sensor (12, 16, 19) is arranged inside the protective housing (8), which detects certain chemical or physical properties in the hollow space (11) as a measured quantity.

4. The machine for material processing according to one of the claims 1 to 3, **characterized in that** the protective housing (8) is double-walled, wherein the walls of the protective housing (8) arranged at a distance from one another enclose at least one hollow space (11) and at least one additional sensor (12, 16, 19) is arranged in the hollow space (11) which detects certain chemical or physical properties in the hollow space (11) as a measured quantity.

5. The machine for material processing according to claim 3 or 4, **characterized in that** the sensor (12) is a sensor for electromagnetic radiation which detects electromagnetic radiation (R) which is incident inside the protective housing (8) and/or the hollow space (11) from outside.

6. The machine for material processing according to claim 3 or 4, **characterized in that** the sensor is a pressure sensor (16) which detects a change of the pressure prevailing inside the protective housing (8) and/or in the hollow space (11).

7. The machine for material processing according to claim 3, **characterized in that** the sensor is a sensor for detecting a sound level which detects a change in the sound level inside the protective housing (8).

8. The machine for material processing according to claim 3 or 4, **characterized in that** the sensor is a chemical sensor which detects a change in the chemical composition of gas inside the protective housing and/or the hollow space.

9. The machine for material processing according to one of the claims 1 to 8, **characterized in that**
- the protective housing (8) has an inlet through which a gaseous medium (13) can be supplied to the inside of the protective housing (8),
- the protective housing (8) has an outlet through which the gaseous medium (14) can be removed, and
- at least one flow sensor (19) for detecting a change in the volume flow (F) of the supplied and/or removed gaseous medium (13, 14) is arranged on the protective housing (8).

10. Arrangement comprising a beam source for laser radiation and a beam guiding system which guides the laser radiation from the beam source to a focusing optical system in a protective housing of a machine for material processing according to one or more of claims 1 to 9.

11. Method for material processing of workpieces with a laser beam wherein a machine-guided protective housing having an outlet opening which surrounds the laser beam directed onto a workpiece during the material processing is placed on the workpiece, **characterized in that**
- a change in an electric resistance caused by damage to the protective housing is detected by means of at least one resistance sensor arranged on the protective housing, wherein the resistance sensor (20) is part of a safety circuit (24),
- the detected actual values of the electric resistance are compared with a desired value for the electric resistance and
- depending on the actual/desired value comparison the laser beam is interrupted and/or the laser beam activation prevented, wherein the safety circuit (24) only enables an activation of the beam source when the outlet opening (9) of the protective housing (8) sits on the workpiece (2).

12. Method for material processing according to claim 11, **characterized in that**
- certain chemical and/or physical properties are detected as measured quantities by means of at least one additional sensor arranged on the protective housing,
- the detected actual values of the measured quantity are compared with a desired value for the measured quantity and
- depending on the desired/actual value comparison the laser beam is interrupted and/or the laser beam activation prevented.

13. The method for material processing according to claim 12, **characterized in that** the actual values of the measured quantities are detected inside the protective housing.

14. The method according to claim 12 or 13, **characterized in that** the actual values of the measured quantities are detected in a hollow space which is enclosed by the walls of the protective housing arranged at a distance from one another.

15. The method according to one of the claims 11-14, **characterized in that** the protective housing is moved with the aid of a robot.

## Revendications

1. Machine destinée à usiner de la matière à l'aide d'un faisceau laser, comprenant un carter protecteur avec un orifice de sortie, qui lors de l'usinage de la matière, entoure un faisceau laser dirigé sur une pièce d'oeuvre,
- sur le carter protecteur (8) étant placé au moins un capteur (12, 16, 19, 20) qui détecte des propriétés physiques déterminées en tant que variable mesurée,
- et le capteur (12, 16, 19, 20) étant relié avec un système de commande qui compare les valeurs réelles détectées de la variable mesurée avec une valeur de consigne pour la valeur mesurée et en fonction de la comparaison valeur de consigne/valeur réelle, interrompt le faisceau laser (3) et/ou empêche son activation,
**caractérisée en ce que**
- qu'au moins l'un des capteurs (12, 16, 19, 20) est un capteur de résistance (20) qui détecte une modification d'une résistance électrique suite à une détérioration du carter protecteur (8) et
- le capteur de résistance (20) est un élément d'un circuit de sécurité (24) qui ne permet une activation de la source de rayonnement qu'une fois que l'orifice de sortie (9) du carter protecteur (8) repose sur la pièce d'oeuvre (2).

2. Machine destinée à usiner de la matière selon la revendication 1, **caractérisée en ce que** l'orifice de sortie (9) du carter protecteur (8) est placé sur une unepièce de pression (21) comporte par le carter protecteur (8) et lecapteur de résistance (20) est placé sur lapièce de pression (21).

3. Machine destinée à usiner de la matière selon la revendication 1 ou 2, **caractérisée en ce qu'**au moins un capteur (12, 16, 19) supplémentaire qui détecte des propriétés chimiques ou physiques déterminées dans la cavité (11) en tant que variable mesurée est placé à l'intérieur du carter protecteur (8).

4. Machine destinée à usiner de la matière selon l'une quelconque des revendications 1 à 3, caractérisée en ce quelecarter protecteur (8) est réalisé avec une double paroi, les parois du carter protecteur (8) placées avec un écart entourant au moins unecavité (11) et au moins un capteur (12, 16, 19) supplémentaire qui détecte des propriétés chimiques ou physiques déterminées en tant que variable mesurée (11) étant placé dans lacavité (11).

5. Machine destinée à usiner de la matière selon la revendication 3 ou 4,caractérisée en ce quelecapteur (12) est un capteurde rayonnement électromagnétique qui détecte un rayonnement (R) électromagnétique (R) incident de l'extérieur vers l'intérieur ducarter protecteur (8) et/oudansla cavité (11).

6. Machine destinée à usiner de la matière selon la revendication 3 ou 4,**caractérisée en ce que** lecapteur est un capteur de pression(16) qui détecte une modification de la pression régnant à l'intérieurducarter protecteur (8) et/oudans lacavité (11) .

7. Machine destinée à usiner de la matière selon la revendication 3, caractérisée en ce quelecapteur est un capteur destiné à détecter un niveau sonore qui détecte une modification du niveau sonore à l'intérieur du carter protecteur (8).

8. Machine destinée à usiner de la matière selon la revendication 3 ou 4, **caractérisée en ce que** le capteur est un capteur chimique qui détecte une modification de la composition chimique du gaz à l'intérieur du carter protecteur et/ou de la cavité.

9. Machine destinée à usiner de la matière selon l'une quelconque des revendications 1 à 8, **caractérisée en ce que**
- le carter protecteur (8) comporte une arrivée par l'intermédiaire de laquelle un milieu (13) gazeux peut être alimenté vers l'intérieur du carter protecteur (8),
- le carter protecteur (8) comporte une sortie par l'intermédiaire de laquelle le milieu (14) gazeux peut être évacué,
- au moins un capteur de débit (19) destiné à détecter une modification du débit volumétrique (F) du milieu gazeux (13, 14) alimenté et/ou évacué est placé sur le carter protecteur.

10. Agencement comportant une source de rayonnement pour un faisceau laser, ainsi qu'un système de guidage de faisceau qui conduit le faisceau laser de la source de rayonnement vers une optique de focalisation dans un carter protecteur d'une machine destinée à usiner des matières selon l'une quelconque ou plusieurs des revendications 1 à 9.

11. Procédé destiné à usiner de la matière de pièces d'oeuvre à l'aide d'un faisceau laser, lors duquel on fait reposer sur la pièce d'oeuvre un carter protecteur guidé mécaniquement, avec un orifice de sortie, qui entoure le faisceau laser dirigé sur une pièce d'oeuvre lors de l'usinage de la matière, que l'on pose sur la pièce d'oeuvre, **caractérisé en ce**
- **qu'**au moyen d'au moins un capteur de résistance placé sur le carter protecteur, on détecte une modification d'une résistance électrique suite à une détérioration du carter protecteur, le capteur de résistance (20) étant un élément d'un circuit de sécurité (24),
- **qu'**on compare les valeurs réelles de la résistance électrique avec une valeur de consigne pour la résistance électrique et
- **qu'**en fonction de la comparaison valeur réelle/valeur de consigne, on interrompt le faisceau laser et/ou on empêche son activation, le circuit de sécurité (24) ne permettant une activation de la source de rayonnement qu'une fois que l'orifice de sortie (9) du carter protecteur (8) repose sur la pièce d'oeuvre (2).

12. Procédé destiné à usiner de la matière selon la revendication 11, **caractérisé en ce**
- **qu'**au moyen d'au moins un capteur supplémentaire placé sur le carter protecteur, on détecte des propriétés chimiques et/ou physiques déterminées en tant que variable mesurée,
- **qu'**on compare les valeurs réelles de la variable mesurée avec une valeur de consigne pour la valeur mesurée et
- **qu'**en fonction de la comparaison valeur de consigne/valeur réelle, on interrompt le faisceau laser et/ou on empêche son activation.

13. Procédé destiné à usiner de la matière selon la revendication 12, **caractérisé en ce qu'**on détecte les valeurs réelles des variables mesurées à l'intérieur du carter protecteur.

14. Procédé selon la revendication 12 ou 13, **caractérisé en ce qu'**on détecte les valeurs réelles des variables mesurées dans une cavité qui est englobée par des parois placées avec un écart mutuel du carter protecteur.

15. Procédé selon l'une quelconque des revendications 11 à 14, **caractérisé en ce que** le carter protecteur est déplacé à l'aide d'un robot.
